# EUROPÄISCHE PATENTSCHRIFT

(11) **EP 3 284 332 B1**
(45) Veröffentlichungstag und Bekanntmachung des Hinweises auf die Patenterteilung: **16.10.2019**
(21) Anmeldenummer: 17184658.7
(22) Anmeldetag: 03.08.2017
(51) Int. Cl.: A01C 7/08, A01C 7/04

(54) **VERTEILMASCHINE UND VERFAHREN ZUR AUSSAAT VON GRANULATARTIGEM VERTEILGUT**
DISTRIBUTION MACHINE AND METHOD FOR SOWING OF GRANULAR MATERIAL
MACHINE DE DISTRIBUTION ET PROCÉDÉ D'ENSEMENCEMENT DE PRODUIT GRANULAIRE

(30) Priorität: 17.08.2016 DE 102016115236
(43) Veröffentlichungstag der Anmeldung: 21.02.2018
(73) Patentinhaber: Horsch Maschinen GmbH, 92421 Schwandorf (DE)
(72) Erfinder: HORSCH, Philipp, 92421 Schwandorf (DE); KÖBLER, Manfred, 92421 Schwandorf (DE); PIRKENSEER, Michael, 92421 Schwandorf (DE)
(74) Vertreter: Benninger, Johannes

(56) Entgegenhaltungen:
- EP-A1- 2 695 508
- EP-A1- 2 832 200
- DE-C1- 19 613 785
- US-A1- 2009 078 178

## Beschreibung

Die vorliegende Erfindung betrifft eine Verteilmaschine für granulatartiges Verteilgut mit den Merkmalen des unabhängigen Anspruchs 1. Die Erfindung betrifft zudem ein Verfahren zur Aussaat von granulatartigem Verteilgut mit den Merkmalen des unabhängigen Verfahrensanspruchs 9.

Verteilmaschinen werden in der Landwirtschaft zur Verteilung von granulatartigem bzw. körnigem Verteilgut wie Saatgut, Dünger oder dergl. eingesetzt. Die Verteilung erfolgt in der Regel jeweils in definierten Reihenabständen mittels verschiedenster Säschare. Die Verteilung soll jeweils derartig erfolgen, dass jedes Schar annähernd mit der gleichen Menge an Verteilgut, unabhängig von der Arbeitsbreite der Maschine, versorgt wird. Ebenfalls soll die Verteilung in Längsrichtung bzw. in Fahrtrichtung der Verteilmaschine derartig erfolgen, dass jeweils möglichst ein einzelnes Korn abgelegt wird. Von diesen als Querverteilung und Längsverteilung bezeichneten Verteilqualitäten hängt der sog. Standraum der Pflanze ab, d.h. wieviel Platz die jeweilige Pflanze auf einem Feld zur Verfügung hat, um sich entsprechend zu entwickeln, wobei auch hier wiederum gilt, je gleichmäßiger der Standraum desto gleichmäßiger der Pflanzenbestand.

Die Verteilmaschinen können generell in drei Hauptkategorien eingeteilt werden; nämlich in mechanisch arbeitende oder pneumatisch arbeitende Drillmaschinen sowie in Einzelkornsämaschinen, wobei wiederum jeder dieser Maschinentypen für ein spezielles Aussaatverfahren bevorzugt Verwendung findet. Mechanisch und pneumatisch arbeitende Verteilmaschinen werden insbesondere zur Drillsaat verwendet, während die Einzelkornsämaschinen insbesondere zur vereinzelten bzw. vergleichmäßigten Einzelkornsaat eingesetzt werden.

Mittels aus dem Stand der Technik bekannt gewordener Einzelkornsämaschinen erfolgt eine vereinzelte bzw. vergleichmäßigte Kornabgabe des Verteilguts in der Reihe mit teilweise großen Reihenabständen der Säschare zueinander; diese Reihenabstände quer zur Fahrtrichtung können bspw. 45cm oder 70cm oder 80cm betragen. Auch werden derartige Einzelkornsämaschinen derzeit in erster Linie für Verteilgüter verwendet, mittels derer eine relativ geringe Anzahl von Körner je Fläche (typische Maßeinheit: Körner / m²) ausgebracht werden soll. Bei diesen Verteilgütern handelt es sich bspw. um Mais, Soja oder dergl. So werden u.a. bei Mais ca. 9 Körner / m² ausgebracht. Dadurch ergeben sich für die zur Vereinzelung des Verteilguts vorgesehenen Vereinzelungsvorrichtungen entsprechend geringe Frequenzen der Verteilgutvereinzelung, welche mit aus dem Stand der Technik bekannt gewordenen Vereinzelungsvorrichtungen erreicht werden können.

Zur Aussaat von Verteilgütern mit größerer Anzahl von Körner / m², wie es bspw. für Weizen typisch ist, finden in der Regel pneumatisch arbeitende Verteilmaschinen Verwendung. Eine vereinzelte Verteilung des Verteilguts in der Reihe war hierbei bislang nicht bzw. nur bei geringen Fahrtgeschwindigkeiten der Verteilmaschine möglich, da bei Weizen bspw. 350 Körner / m² ausgebracht werden, was wiederum sehr hohe Vereinzelungsfrequenzen der Vereinzelungsvorrichtungen voraussetzt. Um auch hier noch einen möglichst gleichmäßigen Standraum für die Pflanze schaffen zu können, weisen derartige Maschinen in der Regel einen geringeren Reihenabstand von bspw. nur 12,5 cm oder 15 cm auf, und die Verteilung erfolgt jeweils als Drillsaat, d.h. ohne exakte Kornvereinzelung in den einzelnen Reihen.

Ein Lösungsansatz für eine Vereinzelungsvorrichtung zur Vereinzelung von Verteilgut wie Weizen mit einer großen Anzahl von Körnern, die pro Flächeneinheit ausgebracht werden (Körner / m²), geht bspw. aus der DE 10 2012 105 048 A1 hervor. Die Vereinzelung des Verteilguts erfolgt bei dieser bekannten Vorrichtung mit Zentrifugalkräften im Inneren dieser Vereinzelungsvorrichtung. Durch diese Vereinzelungsvorrichtung ist es möglich, auch große Körnermengen je Fläche (Anzahlen von Körner / m²) weitgehend vereinzelt bzw. vergleichmäßigt im Boden abzulegen. Derartige Vereinzelungsvorrichtungen setzen jedoch eine gute Querverteilung voraus, d.h. je gleichmäßiger die jeweilige Verteilgutmenge entsprechend der Anzahl an Säschare verteilt wird, desto besser ist auch die Längsverteilung, bzw. desto gleichmäßiger ist der Standraum der Pflanzen zueinander. Ebenso können diese Vereinzelungsvorrichtungen umso gleichmäßiger arbeiten, je gleichmäßiger die einzelnen Säschare bzw. Saatleitungen mit Verteilgut versorgt werden.

Neben einer vereinzelten Verteilgutabgabe bei einer guten Querverteilung ist es zudem wünschenswert, dass einzelne Abgänge bzw. einzelne Schare beliebig zu- und weggeschaltet werden können, so dass Überlappungen von bereits bestellten Flächen mit Verteilgut möglichst unterbunden werden. Dies wird typischerweise als "Section-Control" bezeichnet, wobei auch der Begriff des "Precision Farming" hierfür verwendet wird. Insbesondere sind solche Steuerungseingriffe erforderlich, wenn eine Maschinensteuerung auf Basis von GPS-Daten erfolgen soll.

Ein System zur Verbesserung der Verteilqualität bzw. insbesondere zur Verbesserung der Querverteilung in einer pneumatisch arbeitenden Verteilmaschine geht aus der EP 2 932 818 A1 hervor. Diese pneumatisch arbeitende Verteilmaschine besitzt eine Verteileinheit bzw. einen Verteilerkopf zur gleichmäßigen Aufteilung eines Verteilgutluftvolumenstroms in eine Mehrzahl einzelner Verteilgutluftvolumenströme, entsprechend einer Anzahl von Säscharen. Jedem Abgang des Verteilerkopfes ist eine Sensoreinheit zur Erfassung weitgehend aller im Verteilgutluftvolumenstrom vorhandenen Körner sowie eine mit dieser Sensoreinheit wirkverbundene Einrichtung zur Veränderung eines Durchlassquerschnitts zugeordnet. Mit dieser Einrichtung wird jeweils der Durchlassquerschnitt der entsprechenden Leitung derartig verändert, dass alle Abgänge von zumindest der weitgehend oder annähernd gleichen Menge an Verteilgut passiert werden. Es hat sich jedoch in der Praxis gezeigt, dass die Funktion des Systems nur vollständig gegeben ist, wenn alle Abgänge mit Verteilgut versorgt werden müssen. Werden jedoch einzelne Abgänge komplett verschlossen, um bspw. Fahrgassen anzulegen oder um eine "Section Control" zu ermöglichen, stößt dieses System an seine Grenzen, da sich durch die geschlossenen Abgänge jeweils die Strömungseigenschaften bzw. Luftströmungen im Verteilerturm ändern, wodurch die jeweils nicht geschlossenen Abgänge eine erhöhte Menge an Verteilgut erhalten. Ebenso hat sich die Anpassung des Durchlassquerschnitts als reaktionsträge erwiesen und ist deshalb wiederum nur bedingt für Section Control geeignet.

Eine weitere Verteilmaschine geht aus der EP 2 514 292 B1 hervor. Diese Maschine kombiniert eine pneumatisch arbeitende Verteilmaschine mit einer Einzelkornsämaschine. Die Maschine besitzt hierbei zwei Vorratsbehälter, einen für ein Verteilgut mit großer Anzahl von Körner / m² sowie einen zweiten Vorratsbehälter für ein Verteilgut mit geringerer Anzahl von Körner / m², wobei die Vereinzelung nur für das Verteilgut mit geringerer Anzahl von Körner / m² geeignet ist, sowie die Vereinzelung nur für eine begrenzte Reihenanzahl vorgesehen ist. Somit kann die Vereinzelung bzw. die Verteilqualität nur bei bestimmten Verteilgütern, sowie diese nur bei einer begrenzten Anzahl von Reihen verbessert werden. Darüber hinaus ist für diese Art der Verteilmaschine eine besondere Ausgestaltung des Säschar erforderlich, welches Säschar bspw. durch die EP 2 805 594 A1 bekannt wurde. Das Säschar weist hierbei zwei Saatleitungen auf, eine erste für das Verteilgut mit großer Anzahl von Körner / m² sowie eine zweite für das Verteilgut mit geringerer Anzahl von Körner / m². Eine derartige Gestaltung des Säschar ist jedoch sehr aufwendig und kostenintensiv. Ebenso hat sich dieses als sehr verstopfungsanfällig herausgestellt, da der Bauraum zwischen zwei Sechscheiben durch die zwei Saatleitungen stark verengt wird.

Die EP 2 832 200 A1 beschreibt eine pneumatisch arbeitende Sämaschine mit volumendosiertem Saatgut, welches in einem Vorratsbehälter von der Sämaschine mitgeführt wird und welches über einen Zentralverteiler zu den einzelnen Saatleitungen mit mündungsseitig daran angeordneten Säscharen geführt wird. Das Saatgut wird mittels einer unterhalb des Vorratsbehälters angeordneten Dosiervorrichtung aus dem Vorratsbehälter entnommen und einem Luftstrom zudosiert, welcher von einem Gebläse erzeugt und in einer Luftleitung befördert wird, die zu einem senkrecht angeordneten Steigrohr führt. Das Steigrohr geht in einen Zentralverteiler über, der den körnertragenden Luftstrom möglichst gleichmäßig zu einer Vielzahl von Saatleitungen verteilt, welche Saatleitungen jeweils an Säscharen zum Ablegen des körnigen Gutes in den Boden münden. Bei dem in EP 2 832 200 A1 offenbarten Verteilerturm hat es sich als nachteilig erwiesen, dass die einzelnen Leitungen nicht mittels einer Absperrvorrichtung abgesperrt werden können. Eine Rückführung von Verteilgutluftvolumenströmen in die Steigleitung ist damit auch nicht möglich.

Ziel der vorliegenden Erfindung ist es daher, eine Verteilmaschine zur Verfügung zu stellen, mittels derer eine vereinzelte Kornabgabe von Verteilgütern mit einer großen Anzahl an ausgebrachten Körnern je Flächeneinheit (Körner / m²) ermöglicht wird, bei welcher die Vereinzelung weitgehend unabhängig von der Anzahl an Säscharen erfolgt, und bei der Abgänge beliebig zu- und abschaltbar sind, ohne dass hierdurch die Verteilqualität beeinflusst wird. Ziel ist es ferner, eine Verteilmaschine zu schaffen, welche sowohl die Eigenschaften einer Verteilmaschine zur Drillsaat als auch die Eigenschaften einer Verteilmaschine zur Einzelkornsaat aufweist. Zudem ist es Ziel der Erfindung, ein entsprechendes Verfahren zur Verteilung von granulatartigem Verteilgut zur Verfügung zu stellen.

Diese Ziele der Erfindung werden durch eine Verteilmaschine mit den Merkmalen des unabhängigen Anspruchs 1 sowie durch ein Verfahren mit den Merkmalen des unabhängigen Anspruchs 9 erreicht, wobei weitere vorteilhafte Ausgestaltungen und Weiterbildungen der Erfindung aus den jeweiligen abhängigen Ansprüchen hervorgehen.

Zur Erreichung der genannten Ziele schlägt die Erfindung eine Verteilmaschine zur Verteilung von granulatartigem Verteilgut wie Saatgut, Dünger oder dergl. vor. Die Maschine besitzt zunächst einen Vorratsbehälter, mittels welchem das auszubringende Verteilgut bereitgestellt bzw. mit der Verteilmaschine mitgeführt wird. Dem Vorratsbehälter nachgeordnet ist eine Dosiervorrichtung, mittels welcher das Verteilgut in einer definierbaren Menge bspw. volumetrisch in ein Leitungssystem zugeführt wird. Im Leitungssystem herrscht ein Luftvolumenstrom vor, welcher durch eine Luftfördereinheit wie bspw. einem Gebläse oder dergl. erzeugt wird. Im Leitungssystem entsteht somit ein Verteilgutluftvolumenstrom. Durch diesen Verteilgutluftvolumenstrom wird das Verteilgut innerhalb der Verteilmaschine befördert.

Das Verteilgut wird anschließend entlang des Leitungssystems in Richtung eines Verteilerturms gefördert, wobei der Verteilerturm wiederum ein Steigrohr zur Aufnahme und Weiterleitung des Verteilgutluftvolumenstroms aufweist. Das Steigrohr kann bspw. als Wellrohr ausgebildet und senkrecht in der Verteilmaschine in der Nähe der Säschare angebracht sein. Des Weiteren könnte das Steigrohr in dessen Verlauf eine Querschnittsverjüngung aufweisen, welche derartig gebildet ist, dass sich in diesem Bereich die Durchflussgeschwindigkeit erhöht sowie der Verteilgutluftvolumenstrom zentriert wird.

An das Steigrohr schließt ein Verteilerkopf bzw. ein Hauptverteiler an. Dieser Hauptverteiler könnte bspw. einen pilzförmigen Deckelbereich oder einen flachen Deckelbereich aufweisen. Am Umfang des Verteilerkopfs sind eine Mehrzahl von einzelnen Abgängen angeordnet. Das Verteilgut, welches mittels des Steigrohrs in Richtung des Verteilerkopfes gefördert wird, wird in diesem zu einer Mehrzahl, entsprechend der Anzahl von Abgängen, einzelner Verteilgutluftvolumenströmen aufgeteilt. Diese Verteilung kann u.a. auch durch die Ausgestaltung des Deckelbereichs entsprechend beeinflusst werden, da je nach Form dieses, dass gegen diesen prallende Verteilgut entsprechend anders umgelenkt wird.

Die Anzahl an Abgängen ist vorzugsweise identisch zu einer Anzahl von ebenfalls an der Verteilmaschine angebrachten Säscharen, wobei die Anzahl an Abgängen zur Anzahl an Scharen auch variieren kann. Die Säschare können auf verschiedenste Art und Weise ausgebildet sein. So können diese bspw. als aus dem Stand der Technik bekannte Doppelscheibenschare oder Einscheibenschare oder Zinkenschare oder dergl. ausgebildet sein.

Den Säscharen zugeordnet ist jeweils eine Vereinzelungsvorrichtung, welche Vereinzelungsvorrichtung vorzugsweise der durch die DE 10 2012 105 048 A1 bekannt gewordenen Vereinzelungsvorrichtung entspricht. Ebenso wären auch andere Vereinzelungsvorrichtungen vorstellbar, mittels welchen eine Kornvereinzelung auch von Verteilgut mit einer großen Anzahl von Körner / m² bzw. von hohen Frequenzen von bis zu 120Hz möglich sind. Vorzugsweise finden hier Vereinzelungsvorrichtungen Verwendung, welche nach dem Differenzdruckprinzip oder dem Fliehkraftprinzip oder mechanisch arbeiten.

In einer bevorzugten Ausgestaltung umfasst die Vereinzelungsvorrichtung ein Gehäuse mit einer annähernd kreisbahn- und/oder kreissegmentförmiger Innenmantelfläche, wenigstens eine Einlassöffnung für befördertes granulatartiges Verteilgut oder Körner, eine im Gehäuse konzentrisch rotierende Fördereinrichtung für das beförderte Verteilgut bzw. die Körner sowie wenigstens eine Auslassöffnung die annähernd tangential an die Innenmantelfläche des Gehäuses anschließt, wobei die Fördereinrichtung eine oder mehrere Öffnungen und/oder Absätze an ihrem Außenbereich bzw. in der Nähe ihres Außenumfangs aufweist, die in einem ersten Gehäuse- und/oder Förderbereich mit der Gehäuseinnenmantelfläche eine Fördertasche bildet bzw. bilden, in der die Körner gedrängt werden und durch Zentrifugalkräfte, unterstützt durch die Fördereinrichtung, kreisbogenförmig befördert werden und in einem zweiten Gehäuse- und/oder Vereinzelungsbereich durch eine veränderte Kontur der Innenmantelfläche des Gehäuses nur jeweils ein einzelnes Korn weiterhin unter Zentrifugalkrafteinflüssen in der Öffnung bzw. im Absatz der Fördereinrichtung verbleibt und überschüssige Körner abgesondert werden und diese wiederum zur erneuten Förderung in den ersten Gehäusebereich zurückgeführt werden, wobei wiederum Mitnehmer der Fördereinrichtung mit der Innenmantelfläche des Gehäuses eine Fördertasche bilden, wobei die Mantelfläche von einen breiten in einen schmal werdenden Bereich übergeht, so dass die schmale Mantelflächenbreite nur noch ausreichend Führung für ein zu förderndes Korn bietet.

Das Säschar weist ein Saatrohr auf, mittels welchem das durch die Vereinzelungsvorrichtung vereinzelte bzw. vergleichmäßigte Verteilgut in Richtung einer mittels des Säschar gezogenen Saatfurche geleitet wird. Das Verteilgut kann auch entlang des Saatrohrs von einer Luftströmung getragen werden bzw. von dieser beschleunigt werden, vorzugsweise auf eine Geschwindigkeit, welche größer ist als die Fallgeschwindigkeit.

Die Verbindung zwischen den Abgängen und den Säscharen bzw. den Vereinzelungsvorrichtungen erfolgt mittels einer Saatleitung, wobei diese Saatleitung in die Vereinzelungsvorrichtung mündet und das Verteilgut innerhalb dieser mittels einer Luftvolumenströmung gefördert werden kann. Diese Luftvolumenströmung kann ebenso zur Unterstützung der Vereinzelung der Vereinzelungsvorrichtung dienen sowie zur Erzeugung der Luftvolumenströmung innerhalb des Saatrohrs.

Zwischen dem Abgang des Verteilerkopfs bzw. in diesen integriert und der Vereinzelungsvorrichtung ist erfindungsgemäß eine Absperrvorrichtung angeordnet. Diese Absperrvorrichtung weist eine Weiche auf, mittels derer der Verteilgutluftvolumenstrom zum einen in Richtung eines Rückführbereichs oder zum anderen in Richtung des Säschar bzw. in Richtung der Vereinzelungsvorrichtung geleitet werden kann. Der Rückführbereich ist in diesem Zusammenhang derartig zu verstehen, dass mittels diesem das Verteilgut nach bspw. einem Abschalten eines Abganges in Richtung der Steigleitung oder in Richtung des Vorratsbehälters oder in einen anderen Maschinenbereich wie bspw. das Leitungssystem zurückgeleitet wird und dieses Verteilgut anschließend nochmals in den Verteilerkopf gefördert werden kann.

Durch einen erfindungsgemäßen Aufbau der Verteilmaschine wird somit eine Verteilmaschine geschaffen, welche gegenüber den aus dem Stand der Technik bekannten Verteilmaschinen eine Reihe von Verbesserungen aufweist. So wird durch die Zuordnung einer Vereinzelungsvorrichtung an jedem Schar eine wesentliche Verbesserung der Längsverteilung ermöglicht, unabhängig von der Arbeitsbreite der Maschine und unabhängig von der Anzahl an Reihen. Darüber hinaus wird durch die Rückführung des Verteilguts bei einem Abschalten eines Abgangs zurück in das Steigrohr oder in den Vorratsbehälter oder in einen anderen Maschinenbereich, die Verteilung des Verteilguts auf die anderen Abgänge nicht verschlechtert, da die Querschnitte und somit die Luftströmungen im Verteilerkopf unabhängig von der Stellung der Weiche jeweils gleich bleiben, d.h. die Stellung der Weiche hat keinen Einfluss auf die Wirkungsweise des Verteilerkopfs. Somit ist es mittels der Weiche jederzeit möglich, beliebig viele Abgänge zu- oder abzuschalten, ohne dass hierbei die Querverteilung der Verteilmaschine beeinflusst oder gar verschlechtert wird. Durch eine derartige Ausgestaltung der Verteilmaschine wird somit ein Section Control System bzw. eine GPS basierte Steuerung in Verbindung mit einer vereinzelten Kornabgabe ermöglicht, wodurch die aus dem Stand der Technik bekannten, jeweils nur einer Art von Verteilmaschinen zugeordneten Vorteile somit in einer Verteilmaschine vereint werden, d.h. es wird somit eine Verteilmaschine geschaffen, welche den Aufbau einer Verteilmaschine zur Drillsaat besitzt jedoch mittels dieser eine Einzelkornabgabe ermöglicht wird und ebenso ein Section Control System geschaffen wird.

In einer bevorzugten Form entspricht der Verteilerturm dem Verteilerturm, wie er durch die deutsche Patentanmeldung mit der Anmeldenummer 10 2015 116 378.0 beschrieben ist. Es wird hiermit ausdrücklich erklärt, dass auch für die Merkmale gemäß dieser Offenbarung Schutz begehrt werden kann.

Es kann vorgesehen sein, dass mittels der Dosiervorrichtung das Verteilgut in einer definierten Menge volumetrisch in den Luftvolumenstrom dosiert wird.

In einer bevorzugten Ausgestaltungvariante weist die Absperrvorrichtung neben einem ersten Bereich zur Weiterleitung des Verteilguts in Richtung der Saatleitung bzw. in Richtung der Vereinzelungsvorrichtung sowie einen zweiten Bereich zur Weiterleitung des Verteilguts in Richtung des Rückführbereichs einen dritten Bereich bzw. einen Bypass auf, mittels welchem der erste Bereich und der zweite Bereich dauerhaft pneumatisch verbunden werden, so dass unabhängig von der Stellung der Weiche in der Absperrvorrichtung sowie in den angrenzenden Komponenten jeweils die gleichen Druckniveaus vorherrschen, wodurch sich in diesen ein jeweils weitgehend gleiches Druckniveau einstellt.

Der Verteilerturm weist ein Steigrohr auf, mittels welchem das auszubringende Verteilgut mit Hilfe eines Luftvolumenstroms in Richtung eines an das Steigrohr anschließenden, vorzugsweise ringförmigen, Verteilerkopfes befördert wird. Der Verteilerkopf weist über dessen Umfang verteilt eine Mehrzahl von Abgängen bzw. Reihen auf, mittels welchen Abgängen der durch das Steigrohr beförderte und im Verteilkopf entsprechend der Anzahl an Abgängen aufgeteilte Verteilgutluftvolumenstrom in Richtung von bspw. im Boden oder Bodennah geführten Säscharen wie Scheibenschare, Zinkenschare oder dergl. befördert wird. Zumindest einem der Abgänge zugeordnet bzw. in diesen integriert oder zwischen Abgang und Säschar angeordnet, ist eine Absperrvorrichtung, wobei diese eine Weiche aufweist. Mit dieser Weiche kann der in den Abgängen vorhandene Verteilgutluftvolumenstrom in Richtung einer Saatleitung oder in Richtung eines Rückführbereichs bzw. einer Rückführeinrichtung umgeleitet werden, wobei der Rückführbereich bzw. die Rückführeinrichtung und die Saatleitung mittels eines Bypass pneumatisch verbunden sind. Der Rückführbereich mündet bspw. in einer Rückführeinrichtung, welche bspw. das Saatrohr umgibt bzw. Teil dieses ist, wobei das Saatrohr im Bereich der Rückführeinrichtung Öffnungen aufweist, mittels denen das Steigrohr sowie die Rückführeinrichtung pneumatisch verbunden werden. Auch wäre es denkbar, dass der Rückführbereich bspw. in den Vorratsbehälter oder in das Leitungssystem mündet, wobei jeweils das Steigrohr, die Rückführeinrichtung, der Rückführbereich, der Bypass sowie die Saatleitung permanent pneumatisch verbunden sind, unabhängig der jeweiligen Stellung bzw. Position der Weiche. Dadurch stellt sich bspw. in der Rückführeinrichtung ein Druckniveau P1 sowie im Rückführbereich (Druckniveau P3) bzw. im Bypass ein Druckniveau P2 ein, wobei hierbei P1 kleiner oder gleich zu P2 ist. Diese Druckniveaus herrschen unabhängig von der Stellung der Weiche sowie unabhängig von der Anzahl an verschlossenen Abgängen, wodurch eine beliebige Anzahl von Abgängen verschlossen werden kann, sowie äußere Einflüsse wie variable Saatleitungslängen oder dergl. keine bzw. vernachlässigbare Auswirkungen auf die Querverteilung der landwirtschaftlichen Verteilmaschine haben, wodurch alle Vereinzelungsvorrichtungen, unabhängig von der Anzahl an verschlossenen Abgängen bzw. unabhängig von der Position der Weiche dauerhaft mit weitgehend der gleichen Menge an Verteilgut versorgt werden.

Es kann außerdem vorgesehen sein, dass zumindest zwischen einem Abgang und einer Vereinzelungsvorrichtung eine Druckausgleichsvorrichtung zugeordnet ist.

Durch den Bypass herrschen somit unabhängig von der Stellung der Weiche auch im Bereich der Vereinzelungsvorrichtung jeweils die gleichen Druckniveaus, wodurch wiederum eine Vereinzelungsqualität durch eine Veränderung der Stellung der Weiche nicht negativ beeinflusst wird, da insbesondere die Volumenströme in der Vereinzelungsvorrichtung sowie die Druckniveaus in den Saatleitungen zu den Vereinzelungsvorrichtungen durch den Bypass jeweils weitgehend identisch zueinander sind, wodurch an den Vereinzelungsvorrichtungen jeweils die weitgehend gleichen Bedingungen herrschen.

Die Rückführeinrichtung kann auf verschiedenste Weise ausgestaltet sein. So wäre es denkbar, dass diese als Rohr ausgebildet ist, welche das Steigrohr umgibt, wobei das Steigrohr im Bereich der Rückführeinrichtung Öffnungen aufweist, wodurch das Steigrohr sowie die Rückführeinrichtung pneumatisch verbunden sind. Durch die Öffnungen kann darüber hinaus das Verteilgut aus der Rückführeinrichtung zurück zum Steigrohr befördert oder geleitet werden. An der Rückführeinrichtung können darüber hinaus, vorzugsweise entlang des Umfangs eine Mehrzahl von Stutzen angebracht sein, an welchen wiederum Rückleitungen angebracht sind, welche eine Verbindung zwischen dem Rückführbereich und der Rückführeinrichtung herstellen. Darüber hinaus könnte die Rückführeinrichtung trichterförmig gebildet sein, welcher Trichter das Steigrohr umgibt und zum einen im Bereich der Öffnungen im Steigrohr und zum anderen in den Rückführbereich mündet. Durch eine derartige Ausgestaltung könnte der Teileaufwand wesentlich reduziert werden.

Der Rückführbereich kann auf verschiedenste Weise gebildet werden. So kann dieser bspw. als Rückführöffnung, welche bspw. in der Bodenfläche des Verteilerkopfs oder eines der Abgänge bzw. der Absperrvorrichtung angebracht ist, ausgeführt sein. Ebenso kann die Absperrvorrichtung einen Rückführanschluss aufweisen, welcher als Rückführbereich dient. Ebenso könnten der Rückführbereich und die Rückführeinrichtung eine Einheit bilden, insbesondere wenn die Rückführeinrichtung als trichterförmiges Element gebildet ist, welches bspw. mit dessen unterem Ende im Bereich der Öffnungen des Steigrohrs mündet und welches mit dessen oberem Ende im Bereich der Rückführöffnungen des Verteilerkopf oder der Absperrvorrichtung mündet. An den Rückführbereich könnte jedoch auch mittels eines Rückführanschlusses eine Rückleitung angeschlossen werden, welche in die Rückführeinrichtung mündet. Ebenso könnten mittels eines Sammelstücks zwei oder mehr Rückführbereiche verbunden bzw. gekoppelt werden sowie an das Sammelstück wiederum eine Rückleitung angeschlossen werden.

Ein Positionswechsel der Weiche der Absperrvorrichtung erfolgt erfindungsgemäß mittels eines Stellantriebs, vorzugsweise mittels eines elektrisch- und/oder pneumatisch- und/oder hydraulisch arbeitenden Stellantriebs. Ebenso erfolgt der Antrieb der Vereinzelungsvorrichtung erfindungsgemäß mittels eines motorischen Antriebs, bspw. mittels eines elektrischen- und/oder eines pneumatischen- und/oder eines hydraulischen Antriebes bzw. Motors, wobei der Stellantrieb und der motorische Antrieb erfindungsgemäß jeweils gemeinsam betätigt werden. Diese können jeweils so angesteuert werden, dass bei einem Zu- oder Abschalten eines Abgangs jeweils der Stellantrieb und der Antrieb gemeinsam betätigt werden.

Des Weiteren wäre es vorstellbar, dass das Ein- bzw. Ausschalten des Stellantriebs und des Antriebs jeweils in Abhängigkeit der Position der Verteilmaschine erfolgt. Bewegt sich die Verteilmaschine in Richtung eines Vorgewende oder in Richtung einer bereits bestellten Fläche könnte bspw. zuerst der Stellantrieb die Weiche betätigen bzw. den Abgang schließen und das Verteilgut in Richtung eines Rückführbereichs lenken sowie zeitversetzt anschließend der Antrieb die Vereinzelungsvorrichtung abschalten. Umgekehrt könnte bspw. beim Einsetzen der Maschine nach einem Vorgewende geschaltet werden. Das Positionssignal könnte auf Basis von GPS-Daten in eine Rechnereinheit übermittelt werden, mittels derer der Stellantrieb und der Antrieb geschaltet werden. Auch wäre es denkbar, dass der Stellantrieb und der Antrieb auf Basis der Position der Säschare geschaltet werden. Das bedeutet: Sind die Säschare in einer ausgehobenen Position, werden der Stellantrieb und der Antrieb jeweils abgeschaltet; befinden sie sich in einer abgesenkten Arbeitsposition, werden der Stellantrieb und der Antrieb eingeschaltet, wobei dies erfindungsgemäß auch zeitversetzt erfolgen kann.

Die Erfindung sieht weiterhin ein Verfahren zur Verteilung von granulatartigem Verteilgut wie Saatgut, Dünger oder dergl. vor. Das Verfahren umfasst hierbei zunächst die Bereitstellung des Verteilguts mittels eines Vorratsbehälters sowie die anschließende vorzugsweise volumetrische Dosierung des Verteilguts mittels einer dem Vorratsbehälter nachgeordneten Dosiervorrichtung, wobei das Verteilgut anschließend in ein Leitungssystem abgegeben wird, in welchem Leitungssystem ein Luftvolumenstrom, vorzugsweise erzeugt durch eine Luftfördereinheit bzw. durch ein Gebläse, vorhanden ist, wodurch ein Verteilgutluftvolumenstrom erzeugt wird.

Anschließend wird dieser Verteilgutluftvolumenstrom einem Verteilerturm zugeführt, wobei der Verteilerturm ein Steigrohr zur Aufnahme des Verteilgutluftvolumenstroms aufweist und wobei an das Steigrohr ein Verteilerkopf anschließt. In diesem Verteilerkopf erfolgt eine Aufteilung des einen Verteilgutluftvolumenstroms in eine Mehrzahl von Verteilgutluftvolumenströmen, entsprechend einer Anzahl von über dessen Umfang verteilten Abgängen.

Weiter sind der Verteilmaschine eine Mehrzahl von Säscharen bspw. entsprechend der Anzahl von Abgängen zugeordnet, mittels welchen Säscharen das Verteilgut im Boden abgelegt wird. Wobei wiederum den Säscharen jeweils eine Vereinzelungsvorrichtung zugeordnet ist, mittels welcher das durch die Luftvolumenströmung durch eine Saatleitung getragene Verteilgut jeweils vergleichmäßigt oder vereinzelt wird und anschließend über ein Saatrohr im Boden abgelegt wird.

Das Verfahren sieht weiter vor, dass zwischen dem Abgang des Verteilkopfs und der Vereinzelungsvorrichtung eine Absperrvorrichtung angeordnet ist, wobei die Absperrvorrichtung eine Weiche aufweist, mittels derer der Verteilgutluftvolumenstrom wahlweise in Richtung der Saatleitung oder in Richtung eines Rückführbereich geleitet werden kann. Wodurch ein Zu- oder Abschalten von einzelnen Abgängen keinen Einfluss auf eine Querverteilung bzw. eine Verteilqualität der Verteilmaschine hat, da die Querschnittsverhältnisse sowie die Luftströmungen im Verteilerkopf nicht beeinflusst werden.

Es kann vorgesehen sein, dass mittels der Dosiervorrichtung das Verteilgut volumetrisch in den Luftvolumenstrom zu dosiert wird.

Das Verfahren sieht weiter vor, dass die Absperrvorrichtung einen ersten Bereich zur Weiterleitung des Verteilguts in Richtung der Saatleitung aufweisen sowie einen zweiten Bereich zur Weiterleitung des Verteilguts in Richtung des Rückführbereichs bzw. Steigrohrs oder des Vorratsbehälters oder des Leitungssystems aufweisen sowie einen dritten Bereich aufweisen kann, welcher dritte Bereich einen Bypass ausbildet, über welchen der erste und zweite Bereich dauerhaft pneumatisch verbunden sind, wodurch sich in diesen ein jeweils weitgehend gleiches Druckniveau einstellt.

Erfindungsgemäß ist vorgesehen, dass ein Positionswechsel der Weiche mittels eines Stellantriebes erfolgt sowie dass der Antrieb der Vereinzelungsvorrichtung mittels eines motorischen Antriebs erfolgt.

Erfindungsgemäß werden der Stellantrieb und der motorische Antrieb jeweils gemeinsam betätigt. Die Betätigung des Stellantriebs und/oder des motorischen Antriebs kann bzw. können auf Basis der Position der Verteilmaschine erfolgen.

Wahlweise werden beim erfindungsgemäßen Verfahren der Stellantrieb und der motorische Antrieb mit einem definierten Zeitversatz zueinander betätigt.

Um das oben genannte Ziel zu erreichen, eine vereinzelte Kornabgabe von Verteilgütern mit einer großen Anzahl von ausgebrachten Körnern je gegebener Flächeneinheit sowie ein Section Control System zu ermöglichen, sieht die Erfindung vor, dass zwischen dem Abgang des Verteilerkopf und der Vereinzelungsvorrichtung eine Absperrvorrichtung angeordnet ist, wobei die Absperrvorrichtung eine Weiche aufweist, mittels derer der Verteilgutluftvolumenstrom in Richtung der Saatleitung oder in Richtung eines Rückführbereich geleitet wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt in zwei schematischen Perspektivansichten (Fig. 1A, Fig. 1B) eine Ausführungsvariante einer Verteilmaschine.
Fig. 2 zeigt in drei schematischen Seitenansichten (Fig. 2A, Fig. 2B, Fig. 2C) die Komponenten der Verteilmaschine zur Verteilung des Verteilguts, wobei Fig. 2B und Fig. 2C hierbei im Schnitt dargestellt sind.
Fig. 3 zeigt in zwei Schnittansichten verschiedene Ausgestaltungsmöglichkeiten eines Verteilerturms der Verteilmaschine, wobei Fig. 3A diesen mit Weiche und Bypass zeigt und Fig. 3B diesen lediglich mit einer Druckausgleichsvorrichtung.

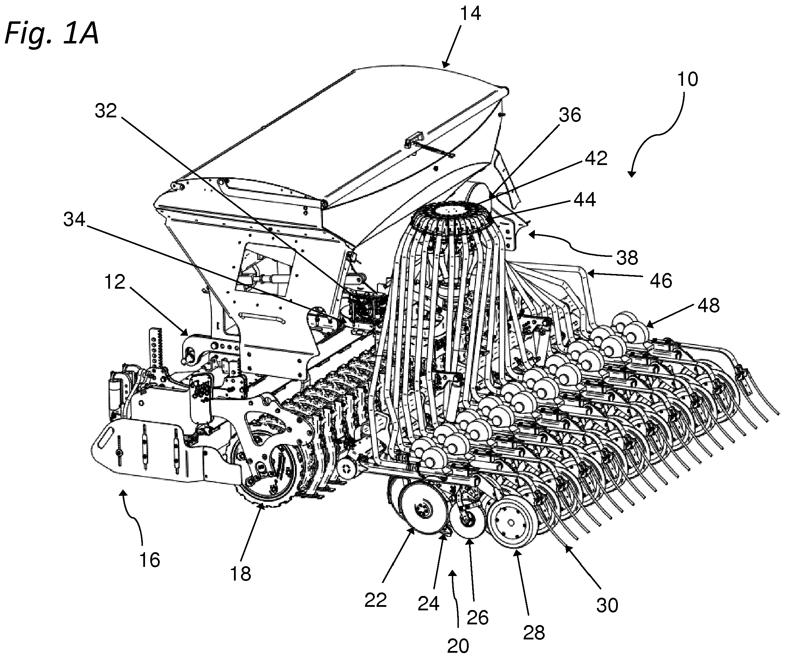

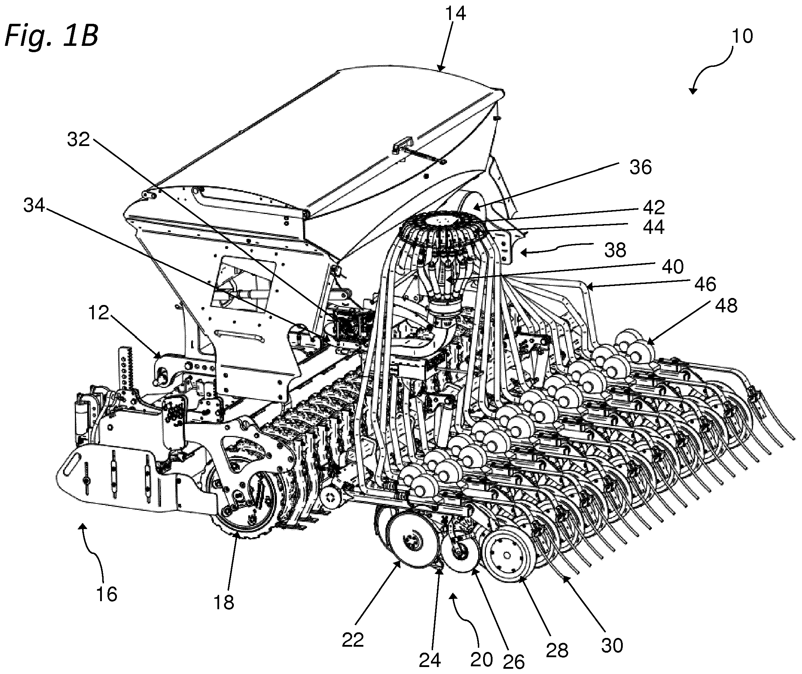

Für gleiche oder gleich wirkende Elemente der Erfindung werden in den Figuren 1 bis 3 jeweils gleiche Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Verteilmaschine oder das erfindungsgemäße Verfahren ausgestaltet sein können und stellen keine abschließende Begrenzung dar.

Eine Ausführungsvariante einer erfindungsgemäßen Verteilmaschine 10 geht aus den zwei schematischen Perspektivansichten der Figuren 1A und 1B hervor. Die Verteilmaschine weist zunächst in deren vorderen Bereich eine Verbindungseinrichtung 12, mittels welcher die Verteilmaschine 10 mit einem hier nicht dargestellten landwirtschaftlichen Zugfahrzeug verbunden werden kann, auf. Bei der Verbindungseinrichtung gemäß der Figuren 1A und 1B handelt es sich um eine Dreipunktanhängung. Es wären jedoch auch andere Anhängevarianten vorstellbar, wie bspw. mittels Zugöse oder Unterlenkeranhängung oder jeglicher aus dem landwirtschaftlichen Bereich bekannt gewordener Anhängung bzw. Verbindungseinrichtung 12.

Im Ausführungsbeispiel der Figuren 1 sind unterhalb eines Vorratsbehälters 14, welcher zur Bereitstellung und zum Mitführen des Verteilguts dient, Arbeitswerkzeuge 16 angeordnet, wobei die Arbeitswerkzeuge 16 hierbei eine Kreiselegge bilden. Es wären jedoch auch andere Arbeitswerkzeuge 16 denkbar. Ebenso wäre es denkbar, dass die Verteilmaschine 10 keinerlei Arbeitswerkzeuge aufweist. Mittels der Arbeitswerkzeuge 16 soll die zu bestellende bzw. zu säende Fläche entsprechend vorbereitet und gelockert werden, um somit die Wachstumsbedingungen für die Pflanzen bzw. des Verteilguts zu verbessern. Der gelockerte Boden wird anschließend mit einer Walze 18 rückverfestigt.

Nach der Walze 18 folgt eine Mehrzahl von Säscharen 20, welche Säschare in Bezug auf die Arbeitsbreite der Verteilmaschine 10 in gleichmäßigen Abständen von bspw. 15 cm zueinander angeordnet sind. Die dargestellten Säschare 20 sind hierbei als sog. Doppelscheibenschare ausgebildet. Das bedeutet, dass diese derartig aufgebaut sind, dass mittels zwei in einem Winkel zueinander angeordneter Sechscheiben 22 im Boden eine Furche erzeugt wird, in welche Furche anschließend mittels eines zwischen den zwei Sechscheiben 22 angeordneten Saatrohrs 24 das Verteilgut abgelegt wird. Um ein Verspringen des Verteilguts in der Saatfurche zu vermeiden, kann dem Saatrohr eine Fangrolle 26 oder ein ähnliches Fangelement nachgeordnet sein. Anschließend wird die Furche mittels einer Druckrolle 28 bzw. mittels eines Striegels 30 geschlossen. Die Druckrolle kann hierbei ebenso zur Tiefenführung des Säschar 20 Verwendung finden. Das hier gezeigte als Doppelscheibenschar ausgeführte Säschar 20 stellt nur eine mögliche Ausgestaltungsform eines Säschar dar. Generell wäre auch die Verwendung eines Einscheibenschars oder Zinkenschars oder Kufenschars oder dergl. vorstellbar.

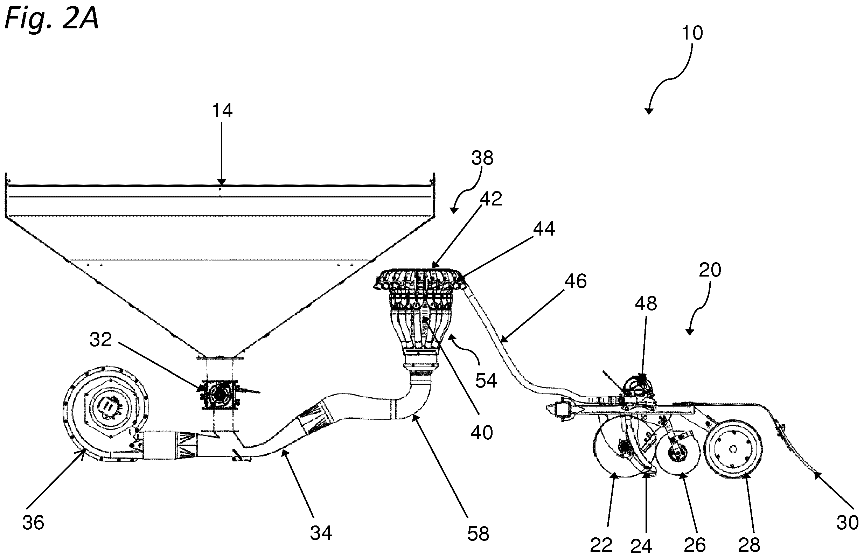

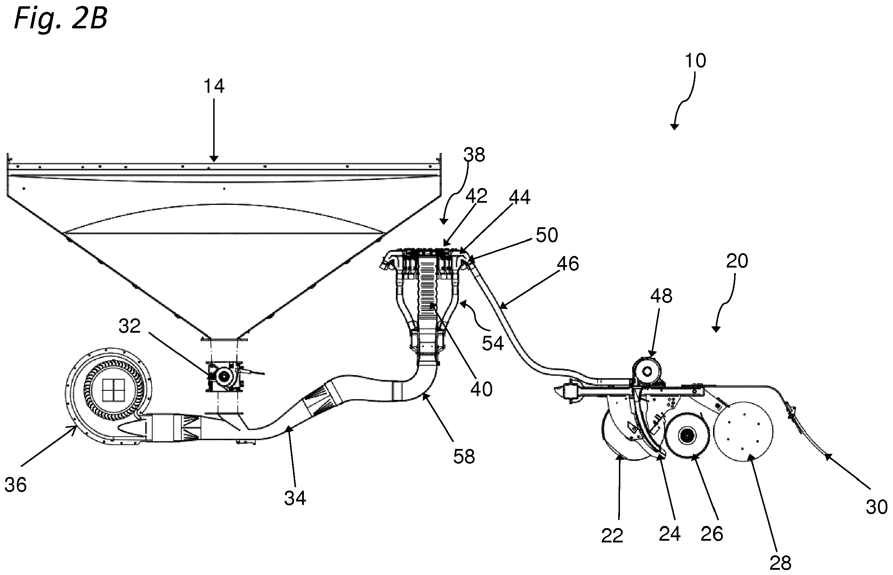

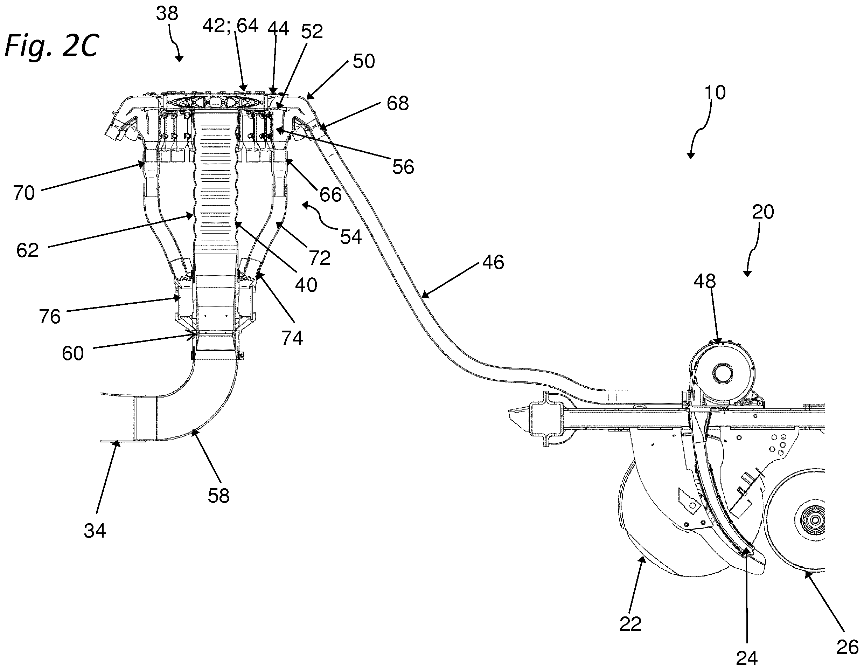

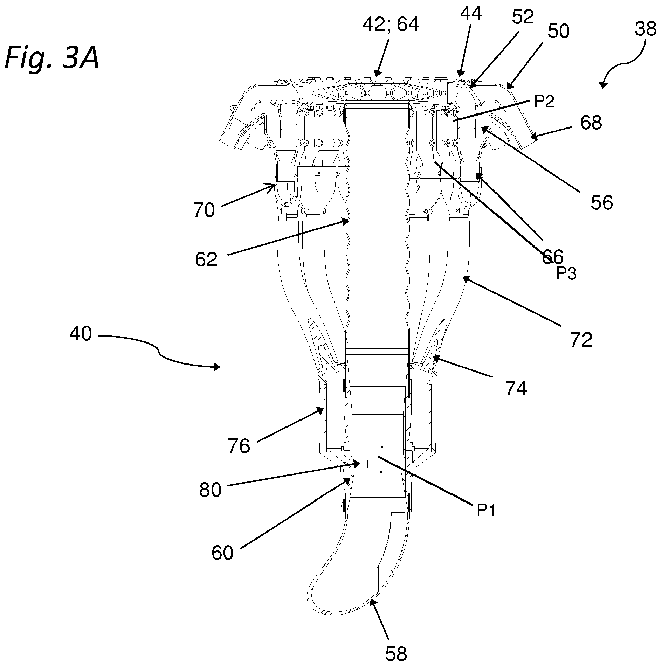

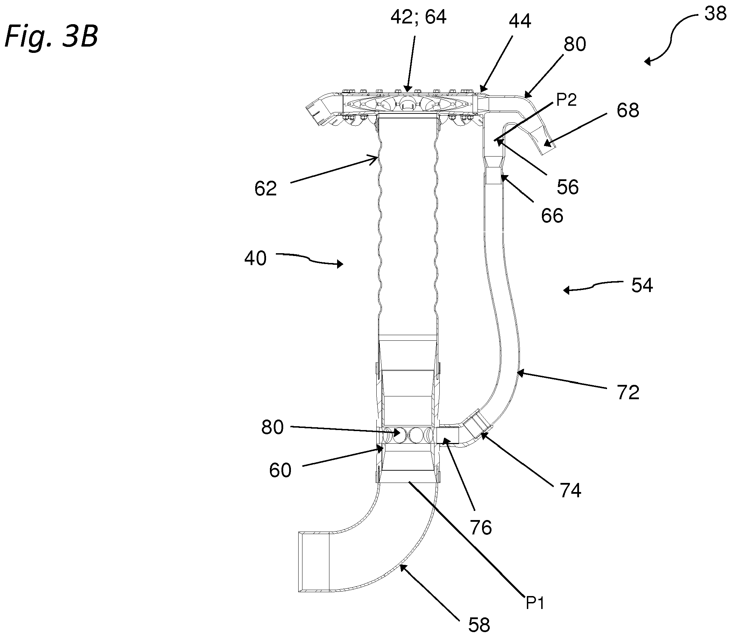

Das durch den Vorratsbehälter 14 mitgeführte Verteilgut wird durch eine an dessen unterem Bereich befindliche Dosiervorrichtung in einer gewünschten Menge vorzugsweise volumetrisch dosiert. Anschließend wird das Verteilgut in ein Leitungssystem 34 abgegeben, in welchem eine Luftströmung vorherrscht, welche von einer Luftfördereinheit 36, wie bspw. einem Gebläse oder dergl. erzeugt wird. Somit entsteht im Leitungssystem 34 ein Verteilgutluftvolumenstrom. Dieser wird anschließend in Richtung eines senkrecht angeordneten Verteilerturms 38 bzw. einem diesen zugeordneten Steigrohr 40 gefördert. Weitere Details dieses Verteilerturms 38 gehen aus den Figuren 2 und 3 hervor.

Der Verteilerturm 38 weist an dessen oberem Ende einen Verteilerkopf 42 auf, an dessen Umfang in regelmäßigen Abständen eine Mehrzahl von Abgängen 44 angeordnet sind. Im Verteilerkopf 42 erfolgt eine Aufteilung des einen Verteilgutluftvolumenstroms in eine Mehrzahl von Verteilgutluftvolumenströmen entsprechend der Anzahl an Abgängen 44. Von den Abgängen 44 führt jeweils eine Saatleitung 46 in Richtung der Säschare 20 bzw. in Richtung von den Säscharen 20 jeweils zugeordneten Vereinzelungsvorrichtungen 48. Hierbei ist zu beachten, dass in der Figur 1B jeweils einige dieser Saatleitungen 46 zum besseren Verständnis nicht komplett durchgängig dargestellt sind.

Das vorzugsweise mittels einer Luftströmung durch die Saatleitungen 46 beförderte Verteilgut wird anschließend mittels der Vereinzelungsvorrichtungen 48 zumindest weitgehend vereinzelt bzw. weitgehend vergleichmäßigt und anschließend durch ein dem Säschar 20 zugeordnetes Saatrohr 24 zum Boden geführt und in einer Saatfurche abgelegt.

Eine stark vereinfachte Ausführungsvariante einer erfindungsgemäßen Verteilmaschine 10 geht aus den Figuren 2A bis 2C hervor, wobei die Figuren 2B und 2C die Verteilmaschine 10 bzw. deren Komponenten im Schnitt darstellen. Der Schnitt entspricht hierbei dem Verteilgutfluss aus dem Vorratsbehälter 14 zum Verteilerturm 38 über den Abgang 44 in Richtung eines Säschar 20, wobei hierbei jeweils eine Reihe im Schnitt dargestellt wurde.

Das durch den Vorratsbehälter 14 mitgeführte Verteilgut wird durch eine an dessen unteren Bereich befindliche Dosiervorrichtung in einer gewünschten Menge vorzugsweise volumetrisch dosiert. Anschließend wird das Verteilgut in ein Leitungssystem 34 abgegeben, in welchem eine Luftströmung vorherrscht, welche von einer Luftfördereinheit 36 wie bspw. einem Gebläse oder dergl. erzeugt wird. Somit entsteht im Leitungssystem 34 ein Verteilgutluftvolumenstrom. Dieser wird anschließend in Richtung eines senkrecht angeordneten Verteilerturms 38 bzw. einem diesen zugeordneten Steigrohr 40 gefördert.

Der Verteilerturm 38 weist an dessen oberem Ende einen Verteilerkopf 42 auf. An dessen Umfang sind in regelmäßigen Abständen eine Mehrzahl von Abgängen 44 angeordnet. Im Verteilerkopf 42 erfolgt eine Aufteilung des einen Verteilgutluftvolumenstroms in eine Mehrzahl von Verteilgutluftvolumenströmen, entsprechend der Anzahl an Abgängen 44. Von den Abgängen 44 führt jeweils eine Saatleitung 46 in Richtung der Säschare 20 bzw. in Richtung von den Säscharen 20 jeweils zugeordneten Vereinzelungsvorrichtungen 48.

Das vorzugsweise mittels einer Luftströmung durch die Saatleitungen 46 beförderte Verteilgut wird anschließend mittels der Vereinzelungsvorrichtungen 48 zumindest weitgehend vereinzelt bzw. weitgehend vergleichmäßigt und anschließend durch ein dem Säschar 20 zugeordnetes Saatrohr 24 zum Boden geführt und in einer Saatfurche abgelegt.

Zwischen dem Abgang 44 des Verteilerkopfes 42 und der Vereinzelungsvorrichtung 48 ist eine Absperrvorrichtung 50 angeordnet. Dieser Absperrvorrichtung ist eine Weiche 52 zugeordnet, mittels welcher der Verteilgutluftvolumenstrom entweder in Richtung einer Saatleitung 46 und somit in Richtung zu einem Säschar 20 gelenkt werden kann, oder mittels welcher der Verteilgutluftvolumenstrom in einen Rückführbereich 54 geführt werden kann, über welchen Rückführbereich 54 das Verteilgut anschließend zurück in Richtung des Verteilerturms bzw. dessen Steigrohr 40 geleitet wird.

Zwischen dem Rückführbereich 54 und der Saatleitung 46 ist in der Absperrvorrichtung 50 ein Bypass 56 integriert. Durch diesen Bypass 56 werden der Rückführbereich 54 sowie die Saatleitung 46 dauerhaft pneumatisch verbunden, wodurch an diesen Positionen jeweils weitgehend das gleiche Druckniveau vorherrscht unabhängig von der jeweiligen Stellung bzw. Position der Weiche 52.

Ein Ausführungsbeispiel eines Verteilerturms 38 geht aus der Figur 3a hervor, wobei dieser wiederum in einer Schnittdarstellung gezeigt ist. Der Verteilerturm 38 besteht im Wesentlichen aus einem Steigrohr 40, an dessen oberen Ende ein Verteilerkopf 42 anschließt. Am Umfang des Verteilerkopfs 42 sind in regelmäßigen Abständen eine Mehrzahl von Abgängen 44 bzw. diesen nachgeordnete bzw. in diesen integrierte Absperrvorrichtungen 50 angeordnet. Der Verteilerturm 38 weist zunächst ein bogenförmiges Übergangsstück 58 auf, mittels diesem erfolgt eine Richtungsumkehr des Verteilgutluftvolumenstrom aus einer weitgehend waagerechten in eine senkrechte Strömungsrichtung. An das Übergangsstück 58 schließt ein Steigrohr 40 an, welches Steigrohr 40 zunächst einen Düsenabschnitt bzw. eine Düse 60 aufweist. Mittels dieser Düse 60 wird der Querschnitt des Steigrohrs 40 konisch verringert und anschließend wiederum konisch vergrößert. Mittels der Düse 40 soll der Verteilgutluftvolumenstrom im Steigrohr 40 zentriert werden, wodurch eine anschließende gleichmäßige Aufteilung dieses im Verteilerkopf 42 verbessert werden soll. Weiter verbessert werden soll diese Zentrierung nochmals über einen der Düse 60 nachgeordneten im Ausführungsbeispiel als Wellrohr ausgebildeten Rohrabschnitt 62. Neben einem Wellrohr wären auch andere Rohrabschnitte 62 mit Querschnittsverjüngung vorstellbar, bspw. derartige bei denen nur jeweils einzelne Vertiefungen vorhanden sind. Auch wäre es denkbar, dass Wellrohr durch eine weitere Düse 60 zu ersetzen, so dass das Steigrohr 40 aus zwei Düsen oder mehr zusammengesetzt ist. Die einzelnen Abschnitte des Steigrohrs 60 können jeweils mittels Schweißung oder mittels Klemmstücken verbunden werden. Ebenso können die Abschnitte aus einem metallischen oder nicht metallischen Werkstoff gefertigt sein. Auch könnte das Steigrohr 40 einteilig und bspw. aus Kunststoff gefertigt sein.

An das obere Ende des Steigrohrs 40 schließt ein kreisförmiger Verteilerkopf 42 an, wobei dieser einen flachen Deckel 64 besitzt. Im Verteilerkopf 42 wird der Verteilgutluftvolumenstrom aus einer senkrechten in eine waagrechte Richtung, bzw. in Richtung der Abgänge 44 umgelenkt, wobei hierzu das Verteilgut bspw. gegen den Deckel 64 prallen kann und anschließend durch die Luftströmung in Richtung der Abgänge 44 geleitet wird. Je gleichmäßiger diese Verteilung zwischen den Abgängen 44 erfolgt, desto gleichmäßiger ist die Querverteilung des Verteilguts an der landwirtschaftlichen Maschine

Um den Verteilgutluftvolumenstrom in den einzelnen Abgängen 44 zu- bzw. abschalten zu können, ist jedem der Abgänge 44 eine Absperrvorrichtung 50 nachgeordnet. Innerhalb dieser ist eine schwenkbare Weiche 52 angebracht. Die Weiche 52 kann bspw. mittels eines elektrischen und/oder pneumatischen und/oder hydraulischen und/oder dergl. Stellantriebs zwischen einer geschlossenen Position (vergl. Fig. 3A rechts) und einer geöffneten Position (vergl. Fig. 2C & Fig. 3A links) verschwenkt werden. Die Absperrvorrichtung 50 besitzt neben einer Weiche 52 noch einen Rückführbereich 54, bestehend aus einem Rückführanschluss 66 und einen Saatleitungsanschluss 68 sowie einen Bypass 56.

Am Rückführanschluss 66 wird zunächst ein Sammelstück 70 angeschlossen. Dieses ist im Ausführungsbeispiel y-förmig ausgebildet und verbindet jeweils zwei Rückführanschlüsse 66 bzw. zwei Absperrvorrichtungen 28. An das Sammelstück 70 wird darüber hinaus eine Rückleitung 72 angeschlossen, welche mit deren unterem Ende über einen Stutzen 74 in eine Rückführeinrichtung 76 mündet. Mit Hilfe der Sammelstücke 70 kann die Anzahl an Rückleitungen 72 erheblich verringert werden, wobei hier wenigstens zwei aber auch mehr Rückleitungen 72 verbunden werden können.

In einer weiteren hier nicht dargestellten Variante wäre es auch denkbar, dass zwischen der Absperrvorrichtung 50 und der Rückführeinrichtung 76 keine Rückleitungen 72 angebracht sind, sondern dass die Rückführung bspw. mittels eines das Steigrohr 40 umgebenden Trichters erfolgt. Auch andere Verbindungsmöglichkeiten zwischen Rückführanschluss 66 bzw. zwischen der Absperrvorrichtung 50 und der Rückführeinrichtung 76 wären durchaus denkbar bzw. vorstellbar.

Die Rückführeinrichtung 76 wird von einem kreisförmigen die Düse 60 bzw. das Steigrohr40 umgebenden Rohr gebildet. Wobei der Düse 60 im Bereich von deren geringsten Durchmesser eine Vielzahl von rechteckigen Öffnungen 78 zugeordnet sind, welche eine Verbindung zwischen dem Steigrohr 40 bzw. der Düse 60 und der Rückführeinrichtung 76 herstellen. Durch die Anordnung der Öffnungen 78 im Bereich der Düse 60 entsteht an den Öffnungen eine Saugwirkung, hervorgerufen durch die erhöhte Strömungsgeschwindigkeit durch die Querschnittsverjüngung der Düse 60, wodurch eine Verteilgutrückführung aus der Rückführeinrichtung 76 in das Steigrohr 40 noch weiter verbessert wird.

Wird die Weiche 52 geschlossen (Fig. 3A) wird der Verteilgutluftvolumenstrom in der Absperrvorrichtung 50 in Richtung des Rückführbereichs 54 umgeleitet und mittels des Rückführanschlusses 66, der Sammelstücke 70, der Rückleitung 72 und der Rückführeinrichtung 76 wieder in das Steigrohr 40 geleitet. Das rückgeführte Verteilgut wird anschließend wieder vom Verteilgutluftvolumenstrom im Steigrohr 40 zum Verteilerkopf 42 und zu den Abgängen 44 gefördert.

Um auch bei wenigstens einer geschlossenen Weiche 52 noch eine gewünschte Querverteilung zu erreichen, ist es erforderlich, dass die Druckniveaus bzw. die Luftströmungen im Verteilerkopf 42 nicht beeinflusst werden bzw. dass der Druck P1 in der Rückführeinrichtung 76 bzw. am Stutzen 74 kleiner oder gleich dem Druck P2 und P3 im Bypass 56 bzw. im Rückführbereich 54 ist. Um dies zu erreichen, sind das Steigrohr 40, der Verteilerkopf 42 die Rückführeinrichtung 76, der Rückführbereich 54, der Bypass 56 sowie der Saatleitungsanschluss 68 permanent pneumatisch verbunden, unabhängig von der Stellung bzw. der Position der Weiche 52. Dies wird insbesondere durch den, bspw. sich in der Absperrvorrichtung 50 befindlichen, Bypass 56 gewährleistet. Somit stellen sich im Verteilerturm 38 diverse Druckniveaus ein, wobei sich in der Rückführeinrichtung 76 ein Druckniveau P1 und in der Absperrvorrichtung 50 bzw. im Rückführbereich 54 ein Druckniveau P2 bzw. P3 ergibt, und wobei P1 in Bezug auf P2 und P3 weitgehend kleiner oder gleich ist, unabhängig der Anzahl geschlossener Weichen 52.

Um die Querverteilung bzw. die Genauigkeit der Ausbringmenge noch weiter zu verbessern, kann in Abhängigkeit der Anzahl an verschlossenen Abgängen 44 jeweils das von der Dosiervorrichtung 32 in das Leitungssystem dosierte Verteilgut entsprechend verringert werden, wobei dies erst ab einer bestimmten Anzahl von verschlossenen Abgängen 44, bspw. fünf Abgängen 44 erforderlich sein kann bzw. ist.

Eine weitere Ausführungsvariante eines Verteilerturms, wie er in der erfindungsgemäßen Verteilmaschine 10 Verwendung finden kann, geht aus der Figur 3B hervor, wobei dieser eine Druckausgleichsvorrichtung 80 aufweist. Der Verteilerturm 38 besteht im Wesentlichen aus einem Steigrohr 40, an dessen oberen Ende ein Verteilerkopf 42 anschließt. Am Umfang des Verteilerkopfs 42 sind in regelmäßigen Abständen eine Mehrzahl von Abgängen 44 bzw. diesen nachgeordnete Absperrvorrichtungen 50 angeordnet. Der Verteilerturm 38 weist zunächst ein bogenförmiges Übergangsstück 58 auf, mittels diesem erfolgt eine Richtungsumkehr des Verteilgutluftvolumenstroms aus einer weitgehend waagerechten in eine senkrechte Strömungsrichtung. An das Übergangsstück 58 schließt ein Steigrohr 40 an, welches Steigrohr 40 zunächst einen Düsenabschnitt bzw. eine Düse 60 aufweist. Mittels dieser Düse 60 wird der Querschnitt des Steigrohrs 40 konisch verringert und anschließend wiederum konisch vergrößert. Mittels der Düse 40 soll der Verteilgutluftvolumenstrom im Steigrohr 40 zentriert werden, wodurch eine anschließende gleichmäßige Aufteilung dieses im Verteilerkopf 42 verbessert werden soll. Weiter verbessert werden soll diese Zentrierung nochmals über einen der Düse 60 nachgeordneten im Ausführungsbeispiel als Wellrohr ausgebildeten Rohrabschnitt 62. Neben einem Wellrohr wären auch andere Rohrabschnitte 62 mit Querschnittsverjüngung vorstellbar, bspw. derartige bei denen nur jeweils einzelne Vertiefungen vorhanden sind. Auch wäre es denkbar, dass Wellrohr durch eine weitere Düse 60 zu ersetzen, so dass das Steigrohr 40 aus zwei Düsen oder mehr zusammengesetzt ist. Die einzelnen Abschnitte des Steigrohrs 60 können jeweils mittels Schweißung oder mittels Klemmstücken verbunden werden. Ebenso können die Abschnitte aus einem metallischen oder nicht metallischen Werkstoff gefertigt sein. Auch könnte das Steigrohr 40 einteilig und bspw. aus Kunststoff gefertigt sein.

An das obere Ende des Steigrohrs 40 schließt ein kreisförmiger Verteilerkopf 42 an, wobei dieser einen flachen Deckel 64 besitzt und wobei dieser auch pilzförmig ausgebildet sein könnte. Im Verteilerkopf 42 wird der Verteilgutluftvolumenstrom aus einer senkrechten in eine waagrechte Richtung, bzw. in Richtung der Abgänge 44 umgelenkt, wobei hierzu das Verteilgut bspw. gegen den Deckel 64 prallen kann und anschließend durch die Luftströmung in Richtung der Abgänge 44 geleitet wird. Je gleichmäßiger diese Verteilung zwischen den Abgängen 44 erfolgt, desto gleichmäßiger ist die Querverteilung des Verteilguts an der landwirtschaftlichen Maschine.

Um unabhängig von äußeren Einflüssen wie Saatleitungslängen oder dergl. ein gewünschtes Querverteilungsergebnis zu erreichen, ist es erforderlich, in den Komponenten des Verteilerturms 38 jeweils ein zumindest weitgehend gleiches bzw. konstantes Druckniveau bzw. weitgehend gleiche bzw. konstante Luftvolumenströme, bzw. weitgehend gleiche bzw. konstante Strömungsgeschwindigkeiten herzustellen. Um dies zu erreichen, sind das Steigrohr 40, die Rückführeinrichtung 76, der Bypass 56, sowie der Saatleitungsanschluss 68 permanent pneumatisch verbunden. Somit stellen sich im Verteilerturm 38 diverse Druckniveaus ein, wobei sich hierbei in der Rückführeinrichtung 76 ein Druckniveau P1 und in der Druckausgleichsvorrichtung 80 ein Druckniveau P2 ergeben, wobei P1 kleiner oder gleich zu P2 ist.

Die in diesem Ausführungsbeispiel gezeigte Druckausgleichsvorrichtung 80 könnte insbesondere in Verbindung mit der in der Figur 3A gezeigten Absperrvorrichtung 50 kombiniert werden, so dass bspw. an einem Verteilerturm 38 nur eine geringe Anzahl von Abgängen 44 mit Absperrvorrichtungen 50 versehen sind sowie die restlichen jeweils mit Druckausgleichsvorrichtungen 80. Dies hätte den Vorteil, dass der Verteilerturm 38 nach wie vor alle Vorteile der sich einstellenden Druckniveaus besitzt, jedoch dieser wesentlich einfacher aufgebaut wäre, da nur eine geringe Anzahl von Abgängen mit Weichen 52 und entsprechenden Stellantrieben versehen werden müsste.

Die Erfindung wurde unter Bezugnahme auf eine bevorzugte Ausführungsform beschrieben. Es ist jedoch für den Fachmann vorstellbar, dass Abwandlungen oder Änderungen der Erfindung gemacht werden können, ohne dabei den Schutzbereich der nachstehenden Ansprüche zu verlassen.

### Bezugszeichenliste

10 Verteilmaschine
12 Verbindungseinrichtung
14 Vorratsbehälter
16 Arbeitswerkzeug
18 Walze
20 Säschar
22 Sechscheibe
24 Saatrohr
26 Fangrolle
28 Druckrolle
30 Striegel
32 Dosiervorrichtung
34 Leitungssystem
36 Luftfördereinheit
38 Verteilerturm
40 Steigrohr
42 Verteilerkopf
44 Abgang
46 Saatleitung
48 Vereinzelungsvorrichtung
50 Absperrvorrichtung
52 Weiche
54 Rückführbereich
56 Bypass
58 Übergangsstück
60 Düse
62 Rohrabschnitt
64 Deckel
66 Rückführanschluss
68 Saatleitungsanschluss
70 Sammelstück
72 Rückleitung
74 Stutzen
76 Rückführeinrichtung
78 Öffnung
80 Druckausgleichsvorrichtung

## Patentansprüche

1. Verteilmaschine (10) für granulatartiges Verteilgut, insbesondere für Saatgut, Dünger oder dergl., zumindest bestehend aus:
- einem Vorratsbehälter (14) zur Bereitstellung des Verteilguts sowie eine diesem nachgeordnete Dosiervorrichtung (32) zur Dosierung des Verteilguts in einen mittels einer Luftfördereinheit (36) erzeugten Luftvolumenstrom, wodurch ein Verteilgutluftvolumenstrom erzeugt wird,
- einem Verteilerturm (38), welcher ein Steigrohr (40) zur Aufnahme und Weiterleitung des Verteilgutluftvolumenstroms aufweist, wobei an das Steigrohr (40) ein Verteilerkopf (42) anschließt, in welchem eine Aufteilung des einen Verteilgutluftvolumenstroms in eine Mehrzahl von Verteilgutluftvolumenströmen, entsprechend einer Anzahl von über dessen Umfang verteilten Abgängen (44) erfolgt,
- einer Mehrzahl von Säscharen (20) zur Ablage des Verteilguts, wobei den Säscharen (20) jeweils eine Vereinzelungsvorrichtung (48) zugeordnet ist, in welche eine Saatleitung (46) mündet, wobei mittels der Vereinzelungsvorrichtung (48) das durch die Saatleitung (46) beförderte Verteilgut vergleichmäßigt oder vereinzelt sowie anschließend über ein dem Säschar (20) zugeordnetes Saatrohr (24) im Boden abgelegt wird,
**dadurch gekennzeichnet, dass** zwischen dem Abgang (44) des Verteilerkopfs (42) und der jeweiligen Vereinzelungsvorrichtung (48) jeweils eine Absperrvorrichtung (50) angeordnet ist, wobei die Absperrvorrichtung (50) eine Weiche (52) aufweist, mittels derer der Verteilgutluftvolumenstrom in Richtung der Saatleitung (46) oder in Richtung eines Rückführbereichs (54) geleitet wird, wobei ein Positionswechsel der Weiche (52) mittels eines Stellantriebs erfolgt sowie der Antrieb der Vereinzelungsvorrichtung (48) mittels eines motorischen Antriebs erfolgt, wobei der Stellantrieb und der motorische Antrieb jeweils gemeinsam oder mit einem definierten Zeitversatz zueinander betätigt werden.

2. Verteilmaschine (10) nach Anspruch 1, **dadurch gekennzeichnet, dass** mittels der Dosiervorrichtung (32) das Verteilgut in einer definierbaren Menge volumetrisch in den Luftvolumenstrom dosiert wird.

3. Verteilmaschine (10) nach Anspruch 1 oder 2, **dadurch gekennzeichnet, dass** die Absperrvorrichtung (50) einen ersten Bereich zur Weiterleitung des Verteilguts in Richtung der Saatleitung (46) aufweist, sowie einen zweiten Bereich zur Weiterleitung des Verteilguts in Richtung des Rückführbereichs (54) bzw. des Steigrohrs (40) oder des Vorratsbehälters (14) oder des Leitungssystems (34) aufweist, sowie einen dritten Bereich aufweist, welcher dritte Bereich einen Bypass (56) ausbildet, über welchen der erste und zweite Bereich dauerhaft pneumatisch verbunden sind, wodurch sich in diesen ein jeweils weitgehend gleiches Druckniveau einstellt.

4. Verteilmaschine (10) nach Anspruch 3, **dadurch gekennzeichnet, dass** ein Druckniveau (P1) in einer Rückführeinrichtung (76) kleiner oder gleich einem Druckniveau (P2 und P3) ist, welches im Bypass (56) und im Rückführbereich (54) vorherrscht.

5. Verteilmaschine (10) nach einem der vorhergehenden Ansprüche 1 bis 4, **dadurch gekennzeichnet, dass** zumindest zwischen einem Abgang (44) und einer Vereinzelungsvorrichtung (48) eine Druckausgleichsvorrichtung (80) angeordnet ist.

6. Verteilmaschine (10) nach einem der vorhergehenden Ansprüche 1 bis 4, **dadurch gekennzeichnet, dass** die Anzahl von Abgängen (44) und Absperrvorrichtungen (50) und Vereinzelungsvorrichtungen (48) und Säscharen (20) identisch sind.

7. Verteilmaschine (10) nach einem der vorhergehenden Ansprüche 1 bis 6, **dadurch gekennzeichnet, dass** die Betätigung des Stellantriebs und/oder des motorischen Antriebs auf Basis der Position der Verteilmaschine (10) erfolgt.

8. Verteilmaschine (10) nach einem der vorhergehenden Ansprüche 1 bis 7, **dadurch gekennzeichnet, dass** das Säschar (20) als Doppelscheibenschar oder als Einscheibenschar oder als Zinkenschar oder als Kufenschar gebildet ist.

9. Verfahren zur Verteilung von granulatartigem Verteilgut wie Saatgut, Dünger oder dergl. wobei das Verfahren umfasst:
- Bereitstellung des Verteilguts mittels eines Vorratsbehälters (14) sowie eine Dosierung des Verteilguts mittels einer dem Vorratsbehälter (14) nachgeordneten Dosiervorrichtung (32) in einen durch eine Luftfördereinheit (36) erzeugten Luftvolumenstrom, wodurch ein Verteilgutluftvolumenstrom erzeugt wird,
- Zuführung des Verteilgutluftvolumenstroms in einen Verteilerturm (38), welcher ein Steigrohr (40) zur Aufnahme und Weiterleitung des Verteilgutluftvolumenstroms aufweist, und wobei an das Steigrohr (40) ein Verteilerkopf (42) anschließt, in welchem eine Aufteilung des einen Verteilgutluftvolumenstroms in einer Mehrzahl von Verteilgutluftvolumenströmen, entsprechend einer Anzahl von über dessen Umfang verteilten Abgängen (44) erfolgt,
- Ablage des Verteilguts mittels einer Mehrzahl von Säscharen (20), wobei den Säscharen (20) jeweils eine Vereinzelungsvorrichtung (48) zugeordnet ist, in welche eine Saatleitung (46) mündet, wobei mittels der Vereinzelungsvorrichtung (48) das durch die Saatleitung (46) beförderte Verteilgut vergleichmäßigt oder vereinzelt sowie anschließend über ein dem Säschar (20) zugeordnetes Saatrohr (24) im Boden abgelegt wird,
**dadurch gekennzeichnet, dass** zwischen dem Abgang (44) des Verteilerkopfs (42) und der Vereinzelungsvorrichtung (48) eine Absperrvorrichtung (50) angeordnet ist, wobei die Absperrvorrichtung (50) eine Weiche (52) aufweist, mittels derer der Verteilgutluftvolumenstrom wahlweise in Richtung der Saatleitung (46) oder in Richtung eines Rückführbereichs (54) geleitet wird, wobei ein Positionswechsel der Weiche (52) mittels eines Stellantriebs erfolgt sowie der Antrieb der Vereinzelungsvorrichtung (48) mittels eines motorischen Antriebs erfolgt, wobei der Stellantrieb und der motorische Antrieb jeweils gemeinsam oder mit einem definierten Zeitversatz zueinander betätigt werden.

10. Verfahren nach Anspruch 9, **dadurch gekennzeichnet, dass** mittels der Dosiervorrichtung (32) das Verteilgut volumetrisch in den Luftvolumenstrom zudosiert wird.

11. Verfahren nach Anspruch 9 oder 10, **dadurch gekennzeichnet, dass** die Absperrvorrichtung (50) einen ersten Bereich zur Weiterleitung des Verteilguts in Richtung der Saatleitung (46) aufweist, sowie einen zweiten Bereich zur Weiterleitung des Verteilguts in Richtung des Rückführbereichs (54) bzw. Steigrohrs (40) oder des Vorratsbehälters (14) oder des Leitungssystems (34) aufweist, sowie einen dritten Bereich aufweist, welcher dritte Bereich einen Bypass (56) ausbildet, über welchen der erste und zweite Bereich dauerhaft pneumatisch verbunden sind, wodurch sich in diesen ein jeweils weitgehend gleiches Druckniveau einstellt.

12. Verfahren nach einem der Ansprüche 9 bis 11, **dadurch gekennzeichnet, dass** die Betätigung des Stellantriebs und/oder des motorischen Antriebs auf Basis der Position der Verteilmaschine (10) erfolgt.

## Claims

1. A distribution machine (10) for granular distribution goods, in particular for seeds, fertilisers, or the like, consisting of at least:
- a storage hopper (14) for supplying the distribution goods, as well as a metering device (32) downstream thereof for metering the distribution goods into an air volume flow generated by means of an air conveyor unit (36), whereby an air volume flow of distribution goods is generated;
- a distribution tower (38), which has a riser pipe (40) for receiving and conveying the air volume flow of distribution goods, wherein a distributor head (42) connects to the riser pipe (40), in which distributor head (42) a division is carried out of the one air volume flow of distribution goods into a plurality of air volume flows of distribution goods, corresponding to a number of outflows (44) distributed around the distributor head (42) circumference;
- a plurality of sowing coulters (20) for the placement of the distribution goods, wherein a separating device (48) is assigned to each sowing coulter (20), with a seed tube (46) leading into the separating device (48), wherein the distribution goods that are conveyed through the seed tube (46) by means of the separating device (48) are equalised or separated, as well as subsequently placed in the ground via a seed tube (24) assigned to the sowing coulter (20);
**characterised in that** a shut-off device (50) is disposed in each instance between the outflow (44) of the distributor head (42) and the particular separating device (48), wherein the shut-off device (50) has a track switch (52) by means of which the air volume flow of distribution goods is guided toward the seed tube (46) or toward a return area (54), wherein a position change of the track switch (52) is carried out by means of an actuator and the driving of the separating device (48) is carried out by means of a motor drive, wherein the actuator and the motor drive are in each instance actuated together or with a specified time offset to each other.

2. The distribution machine (10) according to claim 1, **characterised in that** the distribution goods are volumetrically metered in a specified quantity into the air volume flow by means of the metering device (32).

3. The distribution machine (10) according to claim 1 or 2, **characterised in that** the shut-off device (50) has a first area for conveying the distribution goods toward the seed tube (46); as well as having a second area for conveying the distribution goods toward the return area (54), or toward the riser pipe (40), or toward the storage hopper (14), or toward the duct system (34), as applicable; as well as having a third area, which third area forms a bypass (56) via which the first and second areas are permanently pneumatically connected, whereby a largely identical pressure level is reached in each of these areas.

4. The distribution machine (10) according to claim 3, **characterised in that** a pressure level (P1) in a return apparatus (76) is less than or equal to a pressure level (P2 and P3) prevailing in the bypass (56) and in the return area (54).

5. The distribution machine (10) according to one of the previous claims 1 to 4, **characterised in that** a pressure compensation device (80) is disposed at least between an outflow (44) and a separating device (48).

6. The distribution machine (10) according to one of the previous claims 1 to 4, **characterised in that** the numbers of outflows (44), and of shut-off devices (50), and of separating devices (48), and of sowing coulters (20) are identical.

7. The distribution machine (10) according to one of the previous claims 1 to 6, **characterised in that** the actuation of the actuator and/or of the motor drive is carried out based on the position of the distribution machine (10).

8. The distribution machine (10) according to one of the previous claims 1 to 7, **characterised in that** the sowing coulter (20) is designed as double-disc coulter, or as single-disc coulter, or as tine coulter, or as blade coulter.

9. A method for the distribution of granular distribution goods, such as seeds, fertilisers, or the like, wherein the method comprises:
- supply of the distribution goods by means of a storage hopper (14), as well as a metering of the distribution goods by means of a metering device (32) disposed downstream of the storage hopper (14) into an air volume flow generated by means of an air conveyor unit (36), whereby an air volume flow of distribution goods is generated;
- feeding of the air volume flow of distribution goods into a distribution tower (38), which has a riser pipe (40) for receiving and conveying the air volume flow of distribution goods, and wherein a distributor head (42) connects to the riser pipe (40), in which distributor head (42) a division is carried out of the one air volume flow of distribution goods into a plurality of air volume flows of distribution goods, corresponding to a number of outflows (44) distributed around the distributor head (42) circumference;
- placement of the distribution goods by means of a plurality of sowing coulters (20), wherein a separating device (48) is assigned to each sowing coulter (20), with a seed tube (46) leading into the separating device (48), wherein the distribution goods that are conveyed through the seed tube (46) by means of the separating device (48) are equalised or separated, as well as subsequently placed in the ground via a seed tube (24) assigned to the sowing coulter (20);
**characterised in that** a shut-off device (50) is disposed between the outflow (44) of the distributor head (42) and the separating device (48), wherein the shut-off device (50) has a track switch (52) by means of which the air volume flow of distribution goods is guided selectively toward the seed tube (46) or toward a return area (54), wherein a position change of the track switch (52) is carried out by means of an actuator and the driving of the separating device (48) is carried out by means of a motor drive, wherein the actuator and the motor drive are in each instance actuated together or with a specified time offset to each other.

10. The method according to claim 9, **characterised in that** the distribution goods are volumetrically metered into the air volume flow by means of the metering device (32).

11. The method according to claim 9 or 10, **characterised in that** the shut-off device (50) has a first area for conveying the distribution goods toward the seed tube (46); as well as having a second area for conveying the distribution goods toward the return area (54), or toward the riser pipe (40), or toward the storage hopper (14), or toward the duct system (34), as applicable; as well as having a third area, which third area forms a bypass (56) via which the first and second areas are permanently pneumatically connected, whereby a largely identical pressure level is reached in each of these areas.

12. The method according to one of the claims 9 to 11, **characterised in that** the actuation of the actuator and/or of the motor drive is carried out based on the position of the distribution machine (10).

## Revendications

1. Épandeur (10) pour matériau d'épandage de type granulé, notamment pour semences, engrais ou équivalent, composé au moins :
- d'un réservoir de matériau (14) destiné à fournir le matériau d'épandage, ainsi que d'un dispositif de dosage (32) placé en aval de celui-ci, destiné au dosage du matériau d'épandage dans un débit volumique d'air créé à l'aide d'une unité de convoyage d'air (36), permettant de créer un débit volumique d'air de matériau d'épandage ;
- une tour d'épandage (38) qui présente un tuyau montant (40) destiné à recevoir et à réacheminer le débit volumique d'air de matériau d'épandage, une tête d'épandage (42) étant rattachée au bout du tuyau montant (40), dans laquelle s'effectue un fractionnement dudit un débit volumique d'air de matériau d'épandage en une pluralité de débits volumiques d'air de matériau d'épandage en fonction d'un nombre de sorties (44) réparties sur sa circonférence ;
- une pluralité de socs pour semoir (20) destinés au dépôt du matériau d'épandage, un dispositif d'individualisation (48), dans lequel débouche une conduite de semis (46), étant associé à chaque soc pour semoir (20), le matériau d'épandage convoyé par la conduite de semis (46) étant uniformisé ou individualisé au moyen du dispositif d'individualisation (48) ainsi que déposé sur le sol, ensuite, par le biais d'un tuyau de semis (24) associé au soc pour semoir (20),
**caractérisé en ce que**, entre la sortie (44) de la tête d'épandage (42) et le dispositif d'individualisation (48) respectif, un dispositif d'arrêt (50) est agencé à chaque fois, le dispositif d'arrêt (50) présentant un séparateur (52) qui dirige le débit volumique d'air de matériau d'épandage en direction de la conduite de semis (46) ou en direction d'une zone de refoulement (54), un changement de position du séparateur (52) ayant lieu à l'aide d'un actionneur, de même que l'entraînement du dispositif d'individualisation (48) a lieu par entraînement motorisé, l'actionneur et l'entraînement motorisé étant respectivement actionnés en commun ou avec un décalage temporel défini l'un par rapport à l'autre.

2. Épandeur (10) selon la revendication 1, **caractérisé en ce que**, à l'aide du dispositif de dosage (32), le matériau d'épandage est dosé en volume, dans une quantité définie, dans le débit volumétrique d'air.

3. Épandeur (10) selon la revendication 1 ou 2, **caractérisé en ce que** le dispositif d'arrêt (50) présente une première zone destinée au réacheminement du matériau d'épandage en direction de la conduite de semis (46), ainsi qu'une deuxième zone destinée au réacheminement du matériau d'épandage en direction de la zone de refoulement (54), du tuyau montant (40), du réservoir de matériau (14) ou du système de conduite (34), et qu'il présente une troisième zone, ladite troisième zone constitue une dérivation (56) par laquelle les première et deuxième zones sont reliées de manière durablement pneumatique, ce qui permet d'établir dans celles-ci un niveau de pression respectif sensiblement homogène.

4. Épandeur (10) selon la revendication 3, **caractérisé en ce qu'**un niveau de pression (P1) dans un dispositif de refoulement (76) est inférieur ou égal à un niveau de pression (P2 et P3) qui règne dans la dérivation (56) et dans la zone de refoulement (54).

5. Épandeur (10) selon l'une quelconque des revendications 1 à 4 précédentes, **caractérisé en ce qu'**un dispositif de pressurisation (80) est agencé au moins entre une sortie (44) et un dispositif d'individualisation (48).

6. Épandeur (10) selon l'une quelconque des revendications 1 à 4 précédentes, **caractérisé en ce qu'**il y a un même nombre de sorties (44), de dispositifs d'arrêt (50), de dispositifs d'individualisation (48) et de socs pour semoir (20).

7. Épandeur (10) selon l'une quelconque des revendications 1 à 6 précédentes, **caractérisé en ce que** l'actionnement de l'actionneur et/ou de l'entraînement motorisé s'effectue sur la base de la position de l'épandeur (10).

8. Épandeur (10) selon l'une quelconque des revendications 1 à 7 précédentes, **caractérisé en ce que** le soc pour semoir (20) est constitué en tant que soc à double disque ou en tant que soc mono-disque ou en tant que soc-fourche ou en tant que soc à patin.

9. Procédé d'épandage de matériau d'épandage de type granulés, tel que semences, engrais ou équivalent, le procédé comprenant :
- la fourniture du matériau d'épandage au moyen d'un réservoir de matériau (14) ainsi qu'un dosage du matériau d'épandage au moyen d'un dispositif de dosage (32) agencé en aval du réservoir de matériau (14) dans un débit volumique d'air créé par une unité de convoyage d'air (36), ce qui permet de créer un débit volumique d'air de matériau d'épandage ;
- acheminement du débit volumique d'air de matériau d'épandage dans une tour d'épandage (38) qui présente un tuyau montant (40) destiné à recevoir et à réacheminer le débit volumique d'air de matériau d'épandage, et une tête d'épandage (42) étant rattachée au bout du tuyau montant (40), dans laquelle s'effectue un fractionnement dudit un débit volumique d'air de matériau d'épandage en une pluralité de débits volumiques d'air de matériau d'épandage en fonction d'un nombre de sorties (44) réparties sur sa circonférence ;
- dépôt du matériau d'épandage au moyen d'une pluralité de socs pour semoir (20), un dispositif d'individualisation (48), dans lequel débouche une conduite de semis (46), étant associé à chaque soc pour semoir (20), le matériau d'épandage convoyé par la conduite de semis (46) étant uniformisé ou individualisé au moyen du dispositif d'individualisation (48) ainsi que déposé sur le sol, ensuite, par le biais d'un tuyau de semis (24) associé au soc pour semoir (20),
**caractérisé en ce qu'**un dispositif d'arrêt (50) est agencé entre la sortie (44) de la tête d'épandage (42) et le dispositif d'individualisation (48), le dispositif d'arrêt (50) présentant un séparateur (52) qui dirige le débit volumique d'air de matériau d'épandage au choix en direction de la conduite de semis (46) ou en direction d'une zone de refoulement (54), un changement de position du séparateur (52) s'effectuant à l'aide d'un actionneur, de même que l'entraînement du dispositif d'individualisation (48) s'effectue par un entraînement motorisé, l'actionneur et l'entraînement motorisé étant respectivement actionnés ensemble ou avec un décalage temporel, défini, l'un par rapport à l'autre.

10. Procédé selon la revendication 9, **caractérisé en ce que**, à l'aide du dispositif de dosage (32), une quantité dosée en volume de matériau d'épandage est envoyée dans le débit volumétrique d'air.

11. Procédé selon la revendication 9 ou 10, **caractérisé en ce que** le dispositif d'arrêt (50) présente une première zone destinée au réacheminement du matériau d'épandage en direction de la conduite de semis (46), ainsi qu'une deuxième zone destinée au réacheminement du matériau d'épandage en direction de la zone de refoulement (54), du tuyau montant (40), du réservoir de matériau (14) ou du système de conduite (34), et qu'il présente une troisième zone, ladite troisième zone constituant une dérivation (56) par laquelle les première et deuxième zones sont reliées de manière durablement pneumatique, ce qui permet d'établir dans celles-ci un niveau de pression respectif sensiblement homogène.

12. Procédé selon l'une quelconque des revendications 9 à 11, **caractérisé en ce que** l'actionnement de l'actionneur et/ou de l'entraînement motorisé s'effectue sur la base de la position de l'épandeur (10).
